# EUROPÄISCHE PATENTSCHRIFT

(11) **EP 2 075 115 B1**
(45) Veröffentlichungstag und Bekanntmachung des Hinweises auf die Patenterteilung: **17.04.2013**
(21) Anmeldenummer: 08105870.3
(22) Anmeldetag: 26.11.2008
(51) Int. Cl.: B31F 1/07, B31B 1/88, G09B 21/02

(54) **Rotationsprägeeinrichtung**
Rotation stamping device
Dispositif de matriçage rotatif

(30) Priorität: 13.12.2007 DE 102007060613
(43) Veröffentlichungstag der Anmeldung: 01.07.2009
(73) Patentinhaber: Heidelberger Druckmaschinen Aktiengesellschaft, 69115 Heidelberg (DE)
(72) Erfinder: Dr. Compera, Christian, 69250 Schönau (DE); Diehr, Wolfgang, 41515 Grevebroich (DE); Galle, Steffen, 01159 Dresden (DE); Klassen, Erich, 52538 Gangelt (DE); Schiek, Jana, 76744 Wörth (DE); Terhorst, Carsten, 46499 Hamminkeln (DE); Zeimetz, Leo, 64572 Büttelborn (DE)

(56) Entgegenhaltungen:
- US-A- 3 598 042
- US-A- 5 505 125

## Beschreibung

Die Erfindung betrifft eine Rotationsprägeeinrichtung gemäß dem Oberbegriff von Anspruch 1 und eine Faltschachtelklebemaschine nach Anspruch 7.

Faltschachteln sind Verpackungen aus Karton oder Wellpappe, in geringem Umfang auch aus Kunststoff, die je nach Konstruktion während des Faltprozesses an einer oder mehreren Stellen beleimt werden. Sie werden in der Regel aus einem Zuschnitt produziert. Die Zuschnitte werden üblicherweise auf einer Bogenstanze ausgestanzt. Der Zuschnitt muss mindestens an einer Kante verklebt werden. Die gefalteten Schachteln kommen im flachliegenden Zustand aus der Faltschachtel-Klebemaschine. Das Aufstellen und Befüllen der Schachtel kann maschinell oder auch manuell erfolgen.

Neben den Faltungen, die zur Herstellung der Faltschachteln erforderlich sind, werden als Vorbereitung für den anschließenden Produktionsschritt auch weitere Rilllinien in der Faltschachtel-Klebemaschine vorgebrochen (vorgefaltet). Dadurch werden das Aufstellen der Schachtel und das spätere Befüllen erleichtert.

Dienen die Faltschachteln zur Verpackung von Arzneimitteln, so ist es gesetzlich vorgeschrieben, die Bezeichnung des Arzneimittels in Blindenschrift (so genannte Braille-Schrift) auf die Faltschachtel aufzubringen (bspw. durch Prägen).

Nach dem Stand der Technik erfolgt die Prägung der Blindenschrift entweder während des Stanzprozesses in der Bogenstanze bei der Herstellung der Zuschnitte. Dies ist jedoch aufwendig, da ein Stanzbogen etliche Nutzen, d. h. Zuschnitte enthält und für jeden Nutzen ein Werkzeugpaar bestehend aus Matrize und Patrize bereitgestellt werden muss. Oder es kommen Rotationsprägeeinrichtungen mit zwei rotierenden Prägewerkzeugen zum Einsatz, welche beispielsweise Teil einer Faltschachtelklebemaschine sein können. Bekannter weise verfügen derartige Rotationsprägeeinrichtungen über einen gemeinsamen Antrieb für beide Rotationswerkzeuge. Um die Prägung an der richtigen Position auf den Faltschachtelzuschnitt aufbringen zu können, müssen die Rotationswerkzeuge relativ zum Faltschachtelzuschnitt synchronisiert werden. Insbesondere beim Einbringen einer Blindenschrift in den Faltschachtelzuschnitt muss die Synchronisierung sehr genau erfolgen. Aufgrund des Massenträgheitsmoments von Matrize, Patrize und Rotationsantrieb ist die erforderliche Genauigkeit der Synchronisierung nur schwer bis gar nicht zu erreichen. Weiter nachteilig ist, dass Rotationsprägeeinrichtungen zur besseren Synchronisierung häufig im Start- / Stopp-Betrieb gefahren werden. D. h. die Rotationsprägewerkzeuge werden zur Synchronisierung angehalten und nachfolgend wieder neu beschleunigt. Dadurch wird die Produktionsleistung der Rotationsprägeeinrichtung stark eingeschränkt. Weiter wird dir Produktionsleistung dadurch eingeschränkt, dass keine Anpassung der Rotationsprägeeinrichtung an die Größe des zu bearbeitenden Produktes möglich ist.

Die DE-OS 28 33 618 , sowie die US 3 598 042 zeigen eine Rotationsprägemaschine mit ineinandergreifenden Prägeformen, welche jeweils auf rotierende Walzen justierbar aufmontiert werden. Während die Prägeformen aufeinander abrollen wird zwischen ihnen ein Spalt gebildet, der in etwa der Dicke des zu verarbeitenden Produkts entspricht.

Die EP 1 447 211 A2 zeigt eine Vorrichtung zum Einprägen von Querrillen in Pappe. Die EP 1 537 920 A1 zeigt eine Vorrichtung zum Schneiden, Rillen und Prägen von Bogenmaterial, wie Karton, mit zwei Walzen. Beiden Vorrichtungen ist gemein, dass die Synchronisierung nicht mit der für Blindenschrift notwendigen Genauigkeit durchgeführt werden kann und dass keine Anpassung der Vorrichtungen an die Größe des Produktes und den Abstand der Produkte möglich ist.

Aufgabe der vorliegenden Erfindung ist es, eine Rotationsprägeeinrichtung zu schaffen, welche die Nachteile des Standes der Technik überwindet und bei gleichzeitig hoher Prägequalität eine hohe Ausbringung ermöglicht.

Gelöst wird diese Aufgabe durch eine Rotationsprägeeinrichtung mit den kennzeichnenden Merkmalen von Anspruch 1.

Die erfindungsgemäße Rotationsprägeeinrichtung besitzt zwei rotierende Prägewerkzeuge, angetrieben durch mindestens einen Prägewerkzeugantrieb, zum Einbringen von Prägungen, insbesondere Blindenschrift, in Bedruckstoffe, insbesondere Faltschachtelzuschnitte. Die Prägewerkzeuge werden durch eine mit Stempeln versehene Patrize und eine Matrize gebildet. Die Matrize dient als Gegenform und ist vorteilhafter weise produktneutral und besitzt ein gleichmäßiges Lochmuster. Die Patrize ist als Prägewalze und die Matrize ebenfalls als Walze ausgebildet. Auf der Prägewalze ist ein Prägesegment angebracht, welches erhaben gegenüber der Mantelfläche der Prägewalze ist. Die Länge des Prägesegments - in Umfangsrichtung der Prägewalze betrachtet - entspricht der Erstreckung - in Transportrichtung betrachtet - einer mit einer Prägung zu versehenden Fläche eines Bedruckstoffes. Das Prägesegment ist mit Prägestempeln versehen und bildet während des Prägevorgangs eine Prägung der gewünschten Länge. Während des Prägevorgangs entspricht der Abstand zwischen der Oberfläche des Prägesegments und der Mantelfläche der Matrizenwalze in etwa der Dicke des zu bearbeitenden Bedruckstoffs. Der Abstand der Mantelfläche der Patrizenwalze und der Matrizenwalze, während nicht geprägt wird, ist größer als die Dicke des zu bearbeitenden Bedruckstoffs. Dadurch wird ermöglicht, dass durch beschleunigen und / oder abbremsen der Prägewerkzeuge eine Synchronisation der Prägewerkzeuge relativ zum nachfolgenden Bedruckstoff, d. h. eine Positionierung des Prägesegments relativ zur Position einer mit einer Prägung zu versehenden Fläche auf einen nachfolgenden Bedruckstoff, stattfinden kann.

In einer vorteilhaften Ausführungsform der erfindungsgemäßen Rotationsprägeeinrichtung sind Matrize und / oder Patrize einfach austauschbar. Dadurch kann die Rotationsprägeeinrichtung beispielsweise mit einer Patrize bestückt werden, welche ein Prägesegment besitzt, dessen Länge der Erstreckung einer mit einer Prägung zu versehenden Fläche eines Bedruckstoffes entspricht.

In einer vorteilhaften Ausführungsform der Rotationsprägeeinrichtung sind Matrize und Patrize quer verschieblich und arretierbar auf einer Matrizenwelle bzw. Patrizenwelle angebracht. Dies ermöglicht eine freie Positionierung der Prägung über die Breite eines Bedruckstoffs, d. h. quer zur Transportrichtung des Bedruckstoffs.

In einer besonders vorteilhaften Weiterbildung der Rotationsprägeeinrichtung besteht das Prägesegment aus einem fest mit der Prägewalze verbundenen Segment und mindestens einem weiteren an der Prägewalze lösbar befestigbaren Segment. Das lösbare Segment hat vorteilhafterweise kleinere Ausmaße als das fest mit der Prägewalze verbundene Segment. Dadurch wird es ermöglicht, dass die Erstreckung einer mit einer Prägung zu versehenden Fläche eines Bedruckstoffs durch die Länge des festen Prägesegments und den Längen einer entsprechenden Anzahl an lösbaren Segmenten gebildet wird. Die lösbaren Prägesegmente können beispielsweise mit einem Schwalbenschwanzprofil versehen sein und parallel zur Achse der Patrize auf diese aufgeschoben werden und zur Arretierung verklemmt werden.

In einer vorteilhaften Ausführungsform der Rotationsprägeeinrichtung ist auf das einteilige oder mehrteilige Prägesegment eine mit Prägestempeln versehene Folie aufspannbar. Eine solche Folie ist einfach und kostengünstig herzustellen, erlaubt eine schnelle Montage und einer einfache Austauschbarkeit. Alternativ können die Prägesegmente auch direkt mit Prägestempeln versehen sein.

Hinsichtlich weiterer vorteilhafter Ausgestaltungen der Erfindung wird auf die Unteransprüche sowie die Beschreibung eines Ausführungsbeispiels unter Bezugnahme auf die beiliegenden Zeichnungen verwiesen.

Die Erfindung soll anhand eines Ausführungsbeispiels noch näher erläutert werden. Es zeigen in schematischer Darstellung:
- Fig. 1: den Aufbau einer Faltschachtelklebemaschine mit erfindungsgemäßer Rotationsprägeeinrichtung
- Fig. 2a: eine Detailansicht der Rotationsprägeeinrichtung mit Prägesegmenten an der Patrize
- Fig. 2b: einen Bedruckstoff mit der Position der Prägung
- Fig. 2c: eine Detailansicht der Patrize

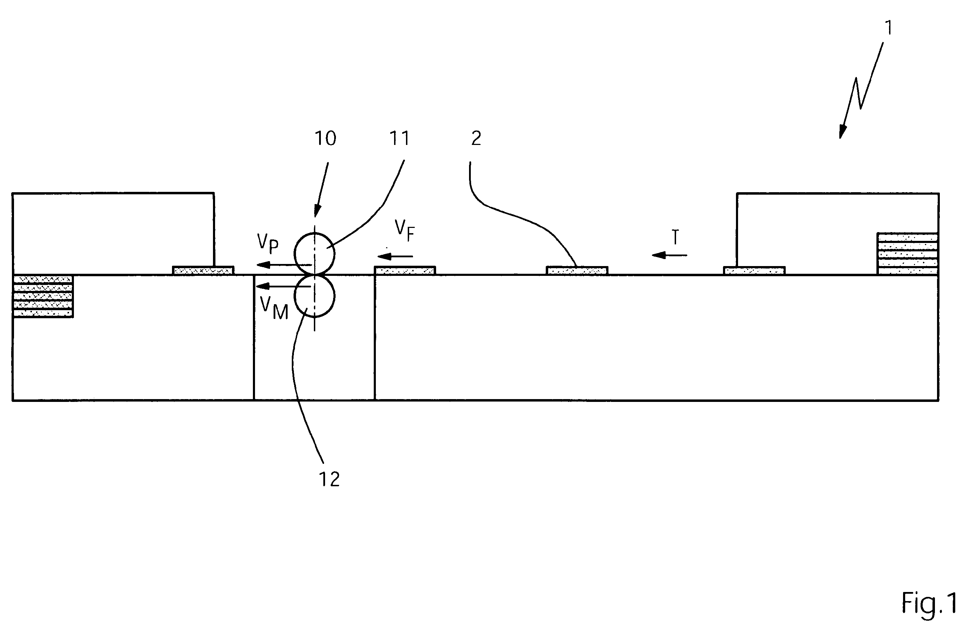

Fig. 1 zeigt eine Faltschachtelklebemaschine 1 mit einer erfindungsgemäßen Rotationsprägeeinrichtung 10. Faltschachtelzuschnitte 2 werden von einem Anleger in Transportrichtung T durch die Faltschachtelklebemaschine 1 und durch die Rotationsprägeeinrichtung 10 zu einem Ausleger transportiert. Die Rotationsprägeeinrichtung 10 besitzt eine Patrize 11 und eine Matrize 12 zum Einbringen von Prägungen in die Faltschachtelzuschnitte 2. Die Faltschachtelzuschnitte 2 werden mit einer Kartonteilung A, auch als Abschnittslänge bezeichnet, mit der Geschwindigkeit vF transportiert.
In der Berührungslinie von Patrize 11 und Faltschachtelzuschnitt 2 während des Prägevorgangs besitzt die Patrize 11 die Geschwindigkeit vP. In der Berührungslinie von Matrize 12 mit Faltschachtelzuschnitt 2 während des Prägevorgangs besitzt die Matrize 12 die Geschwindigkeit vM. Während des Prägevorgangs haben die Geschwindigkeiten von Matrize vM, Patrize vP und Faltschachtelzuschnitt vF denselben Betrag, so dass es zu keinen Relativbewegungen zwischen Werkzeugen 11, 12 und Faltschachtelzuschnitt 2 kommt und damit Markierungen des Faltschachtelzuschnitts vermieden werden. Dazu müssen Patrize 11 und Matrize 12 relativ zueinander bezüglich ihrer Geschwindigkeit synchronisiert sein. Weiter müssen Patrize 11 und Matrize 12 relativ zueinander bezüglich ihrer Winkelposition synchronisiert sein, d.h. es muss sichergestellt sein, dass die Stempel der Patrize 11 in Löcher der Matrize 12 eintauchen können. Besitzen Patrize 11 und Matrize 12 jeweils einen eigenen Prägewerkzeugantrieb so erfolgt die Synchronisation bevorzugt elektronisch. Werden Patrize 11 und Matrize 12 durch einen gemeinsamen Prägewerkzeugantrieb angetrieben, so erfolgt die Synchronisation mechanisch, beispielsweise durch Kopplung von Patrize 11 und Matrize 12.

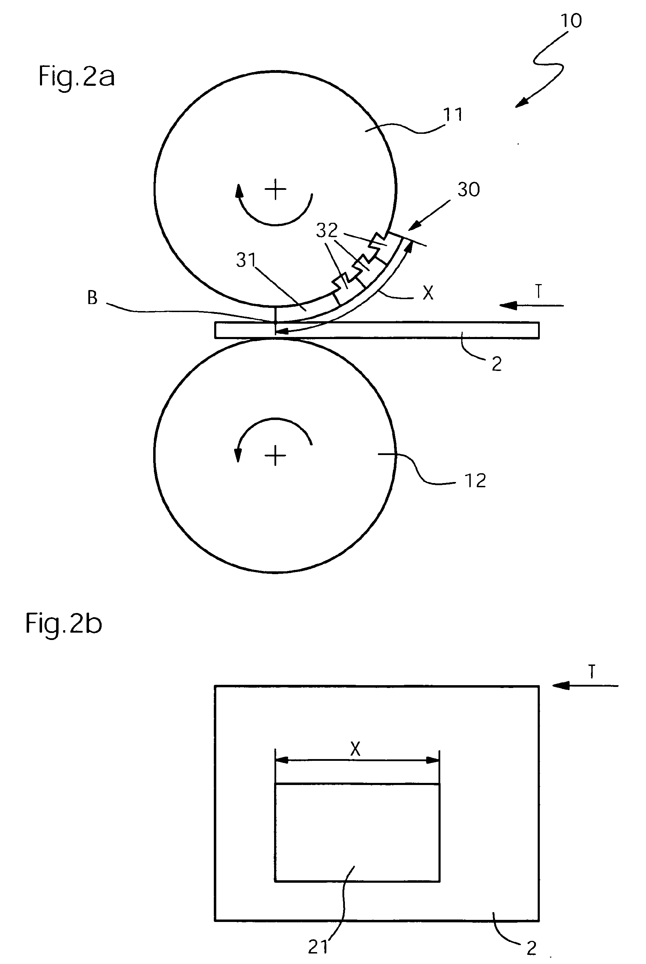

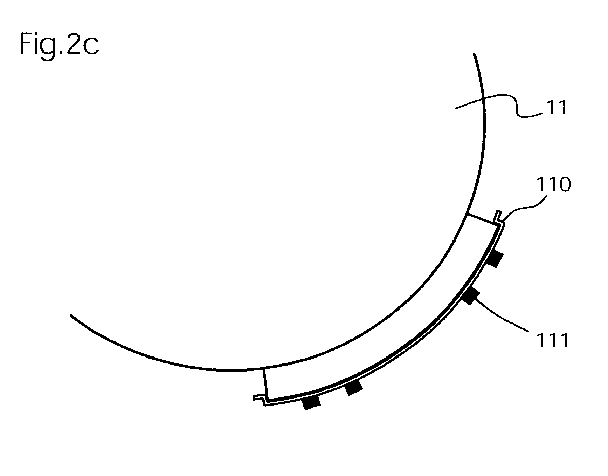

Fig. 2a zeigt eine Detailansicht der Rotationsprägeeinrichtung 10 in einer Schnittdarstellung. Die Rotationsprägeeinrichtung 10 besitzt eine Patrize 11 und eine Matrize 12, welche beide, wie durch Pfeile angedeutet, rotieren. Zwischen Patrize 11 und Matrize 12 befindet sich ein Faltschachtelzuschnitt 2, welcher in Transportrichtung T transportiert wird. Fest mit der Patrize 11 verbunden ist ein Prägesegment 31. Weitere Prägesegmente 32 sind austauschbar gestaltet und können lösbar an der Patrize 11 befestigt werden. Die Prägesegmente 30 sind erhaben gegenüber der Mantelfläche der Prägewalze der Patrize 11. D. h. der Prägeradius der Patrize 11 ist im Bereiche der Prägesegmente 30 größer als der Radius in denjenigen Bereichen der Patrize 11, die nicht mit Prägesegmenten 30 versehen sind. Auf die Prägesegmente 30 ist eine Folie 110 aufgespannt (siehe Fig 2c), welche mit Prägestempeln 111 versehen ist.

Die Prägesegmente 30 erstrecken sich über den Umfang eines Teilkreises X. Die Erstreckung X der Prägesegmente 30 ist dabei auf die Länge X der zu erzeugenden Prägung abgestimmt. Wie in Fig. 2b dargestellt, besitzt die mit einer Prägung zu versehende Fläche 21 eines Faltschachtelzuschnitts 2 die Länge X. Die Erstreckung des Prägesegments 30 wird durch Kombination des festen Prägesegmentes 31 mit einer entsprechenden Anzahl an austauschbaren Prägesegmenten 32 abgestimmt und besitzt ebenfalls die Länge X. Dadurch wird erreicht und wie in Fig. 2a dargestellt, dass die Patrize 11 nur während des Prägevorgangs im Bereich des Prägesegments 30 auf dem Faltschachtelzuschnitt 2 abrollt und dessen Prägung bewirkt. Vor und nach dem Prägevorgang steht die Patrize 11 mit dem Faltschachtelzuschnitt 2 nicht in Berührung. In diesem Zeitfenster, auch als Asynchronphase bezeichnet, kann die Patrize 11 beschleunigt oder abgebremst werden, um so das mit Prägestempeln versehene Prägesegment 30 relativ zur Position einer mit einer Prägung zu versehenden Fläche 21 eines Faltschachtelzuschnitts 2 synchronisieren zu können, d.h. ausrichten zu können.

### Bezugszeichenliste

- 1: Faltschachtelklebemaschine
- 2: Faltschachtelzuschnitt

- 10: Rotationsprägeeinrichtung
- 11: Patrize
- 12: Matrize
- 13: Patrizenwelle
- 14: Matrizenwelle

- 21: mit einer Prägung zu versehende Fläche

- 30: Prägesegment
- 31: festes Prägesegment
- 32: austauschbares Prägesegment

- 110: Folie
- 111: Stempel

- vP: Geschwindigkeit Patrize
- vM: Geschwindigkeit Matrize
- vF: Geschwindigkeit Faltschachtelzuschnitt

- A: Abstand zweiter Faltschachtelzuschnitte
- T: Transportrichtung
- X: Länge der zu erzeugenden Prägung
- B: Berührungslinie Patrize - Faltschachtelzuschnitt
- b: Bewegung der Patrize

## Patentansprüche

1. Rotationsprägeeinrichtung (10) mit zwei rotierenden zylinderförmigen Prägewerkzeugen (11, 12), wobei es sich um eine Patrize (11) und eine Matrize (12) handelt, zum Einbringen von Prägungen, insbesondere Blindenschrift, in einen Bedruckstoff (2), insbesondere einen Faltschachtelzuschnitt,
wobei die Patrize (11) als Prägestempel (111) aufweisende Prägewalze und die Matrize (12) ebenfalls als Walze ausgebildet ist, dass auf der Prägewalze ein Prägesegment (30) angebracht ist, welches erhaben gegenüber der Mantelfläche der Prägewalze ist und dessen Länge (X) in Umfangsrichtung der Prägewalze, der Erstreckung in Transportrichtung (T) einer mit einer Prägung zu versehenden Fläche (21) eines Bedruckstoffs (2) entspricht, wobei das Prägesegment (30) mit Prägestempeln (111) versehen ist,
**dadurch gekennzeichnet,**
**dass** während des Prägevorgangs der Abstand zwischen der Oberfläche des Prägesegments und der Mantelfläche der Matrizenwalze in etwa der Dicke des zu bearbeitenden Bedruckstoffs (2) entspricht, und so dass, während nicht geprägt wird, der Abstand der Mantelfläche der Matrizenwalze von der Mantelfläche der Prägewalze größer als die Dicke des zu bearbeitenden Bedruckstoffes ist, und dass die Matrize (12) als produktneutrale Gegenform ausgebildet ist.

2. Rotationsprägeeinrichtung nach Anspruch 1,
**dadurch gekennzeichnet,**
**dass** die Patrize (11) beschleunigt oder abgebremst werden kann, um das mit Prägestempeln (111) versehene Prägesegment (30) relativ zur Position einer mit einer Prägung zu versehenden Fläche (21) eines Bedruckstoffs (2) synchronisieren zu können, ohne dass die Patrize (11) dabei mit dem Bedruckstoff (2) in Berührung ist.

3. Rotationsprägeeinrichtung nach Anspruch 1,
**dadurch gekennzeichnet,**
**dass** Matrize (12) und / oder Patrize (11) einfach austauschbar sind.

4. Rotationsprägeeinrichtung nach Anspruch 1,
**dadurch gekennzeichnet,**
**dass** Matrize (12) und Patrize (11) querverschieblich auf einer Matrizenwelle (14) bzw. Patrizenwelle (13) angebracht sind.

5. Rotationsprägeeinrichtung nach Anspruch 1, 2 oder 4,
**dadurch gekennzeichnet,**
**dass** das Prägesegment (30) aus einem fest mit der Prägewalze verbundenen Segment (31) und mindestens einem weiteren an der Prägewalze lösbar befestigbaren Segment (32) besteht.

6. Rotationsprägeeinrichtung nach einem der Ansprüche 1, 2, 4 oder 5,
**dadurch gekennzeichnet,**
**dass** auf das Prägesegment (30) eine mit Prägestempeln (111) versehene Folie (110) aufspannbar ist.

7. Rotationsprägeeinrichtung nach einem der Ansprüche 1, 2, 4 oder 5,
**dadurch gekennzeichnet,**
**dass** die Prägestempel (111) fest mit dem Prägesegment (30) verbunden sind.

8. Faltschachtelklebemaschine (1) mit einer Rotationsprägeeinrichtung (10) nach einem der Ansprüche 1 bis 7.

## Claims

1. A rotary embossing device (10) including two rotating cylindrical embossing tools (11, 12), embodied as a male tool (11) and a female tool (12) for introducing embossments, in particular braille characters, into a printing material (2), in particular a folding box blank, wherein the male tool (11) is embodied as an embossing roller having an embossing die (111) and the female tool (12) is likewise embodied as a roller,
wherein an embossing segment (30) is attached to the embossing roller, the embossing segment being raised relative to the circumferential surface of the embossing roller and having a length (X) in the circumferential direction of the embossing roller that corresponds to the extension of a printing material (2) surface (21) to be embossed in the transport direction (T),
and wherein the embossing segment (30) is provided with embossing dies (111), **characterized in**
**that** during the embossing process, the distance between the surface of the embossing segment and the circumferential surface of the female tool roller approximately corresponds to the thickness of the printing material (2) to be processed,
**that** when no embossing takes place, the distance between the circumferential surface of the female tool roller and the circumferential surface of the embossing roller is greater than the thickness of the printing material to be processed,
and **that** the female tool (12) is embodied as an all-purpose counter-form.

2. Rotary embossing device according to Claim 1,
**characterized in**
**that** the male tool (11) can be accelerated or decelerated to be able to synchronize the embossing segment (30) provided with embossing dies (111) relative to the position of a surface (21) of a printing material (2) to be provided with an embossment and that the male tool (11) does not contact the printing material (2) during the process.

3. Rotary embossing device according to Claim 1,
**characterized in**
**that** the female tool (12) and/or the male tool (11) are easily exchangeable.

4. Rotary embossing device according to Claim 1,
**characterized in**
**that** the female tool (12) and the male tool (11) are arranged on a female tool shaft (14) and a male tool shaft (13), respectively, in a way to be transversely movable.

5. Rotary embossing device according to Claim 1, 2, or 4,
**characterized in**
**that** the embossing segment (30) consists of a segment (31) that is firmly connected to the embossing roller and of at least one further segment (32) that is releasably fixable to the embossing roller.

6. Rotary embossing device according to one of Claims 1, 2, 4, or 5,
**characterized in**
**that** a foil (110) provided with embossing dies (111) is mountable onto the embossing segment (30).

7. Rotary embossing device according to one of Claims 1, 2, 4, or 5,
**characterized in**
**that** the embossing dies (111) are firmly connected to the embossing segment (30).

8. Folding-box gluing machine (1) including a rotary embossing device (10) according to one of claims 1 to 7.

## Revendications

1. Dispositif de gaufrage rotatif (10) comportant deux outils de gaufrage rotatifs cylindriques (11, 12), pour lesquels il s'agit d'une patrice (11) et d'une matrice (12) pour l'introduction de gaufrages, en particuier le braille dans un substrat imprimé (2), en particulier une découpe de boîte pliante,
**caractérisé en ce que** la patrice (11) est réalisée comme un rouleau de gaufrage présentant un tampon de gaufrage (111) et la matrice (12) étant réalisée également comme rouleau, de sorte que sur le rouleau de gaufrage, il est placé un segment de gaufrage (30) qui est en relief par rapport à la surface d'enveloppe du rouleau de gaufrage et dont la longueur (X) correspond dans la direction périphérique du rouleau de gaufrage, à l'extension dans le sens du transport (T) d'une surface munie d'un gaufrage (21) d'un substrat imprimé (2), le segment de gaufrage (30) étant muni de tampons de gaufrage (111),
**caractérisé en ce que**
pendnat l'opératon de gaufrage, la distance entre la surface du segment de gaufrage et la surface d'enveloppe du roleau de matrice correspond approximativement à l'épaisseur du substrat imprimé (2) à travailler et pendant que le gaufrage n'est pas effectué, la distance entre la surface d'enveloppe du rouleau de matrice et la surface d'enveloppe du rouleau de matrice est supérieure à l'épaisseur du substrat imprimé (2) à travailler et **en ce que** la matrice (12) est réalisée comme un moule opposé neutre pour le produit.

2. Dispositif de gaufrage rotatif selon la revendication 1,
**caractérisé en ce que**
la patrice (11) peut etre accélérée ou freinée pour pouvoir synchroniser le segment de guafrage (30) muni de tampons de gaufrage (111) par rapport à la position d'une surface (21) du substrat imprimé (2) recevant le gaufrage, sans que la patrice (11) entre en contact avec le substrat imprimé (2).

3. Dispositif de gaufrage rotatif selon la revendication 1, **caractérisé en ce que** la matrice (12) et/ou la patrice (11) sont simplement interchangeables.

4. Dispositif de gaufrage rotatif selon la revendication 1, **caractérisé en ce que** la matrice (12) et la patrice (11) sont disposées mobiles transversalement sur un arbre de matrice (14), respectivement un arbre de patrice (13).

5. Dispositif de gaufrage rotatif selon la revendication 1, 2 ou 4, **caractérisé en ce que** le segment de gaufrage (30) se compose d'un segment (31) relié fixement au rouleau de gaufrage et au moins d'un autre segment (32) pouvant être fixé de manière amovible sur le rouleau de gaufrage.

6. Dispositif de gaufrage rotatif selon l'une des revendications 1, 2, 4 ou 5 **caractérisé en ce qu'**une feuille (110) munie de tampons de gaufrage (111) peut être tendue sur le segment de gaufrage (30).

7. Dispositif de gaufrage rotatif selon l'une des revendications 1, 2, 4 ou 5 **caractérisé en ce que** les tampons de gaufrage (111) sont reliés fixement au segment de gaufrge (30) .

8. Machine encolleuse de boîtes pliantes (1) avec un dispositf de gaufrage rotatif (10) selon l'une des revenications 1 à 7.
